# EUROPEAN PATENT APPLICATION

(11) **EP 2 869 181 A1**
(43) Date of publication of application: **06.05.2015**
(21) Application number: 14191881.3
(22) Date of filing: 05.11.2014
(51) Int. Cl.: G06F 3/0488

(54) **Method for executing functions in response to touch input and electronic device implementing the same**

(30) Priority: 05.11.2013 KR 20130133426
(71) Applicant: Samsung Electronics Co., Ltd., Suwon-si, Gyeonggi-do 443-742 (KR)
(72) Inventor: Kim, Yuhwan, Suwon-si, 443-742 Gyeonggi-do (KR); Choi, Seunghwan, Suwon-si, 443-742 Gyeonggi-do (KR)
(74) Representative: Nederlandsch Octrooibureau

(57) **Abstract**

A method of executing a function in response to a touch input and an electronic device implementing the same are provided. The method includes determining, by the electronic device, a first priority application among applications installed in the electronic device, mapping a function of the first priority application to a virtual button based on a predetermined touch input, recognizing the touch input on the virtual button that is displayed by a display module, and executing a function corresponding to the recognized touch input.

## Description

### TECHNICAL FIELD

The present disclosure relates to a method of executing a function in response to a touch input and an electronic device implementing the same.

### BACKGROUND

An electronic device provides a user with various input schemes. In particular, to provide a user with a further convenient and natural input scheme, the electronic device may be equipped with a touch screen, in addition to a button-type key. The touch screen may include a touch panel. The electronic device may sense a touch of a user using the touch panel, and may recognize a touch input of the user. Further, as semi-conductor technologies and data communication technologies have developed, the electronic device may include various complex functions. That is, the electronic device may execute various complex functions, which are executed in response to a touch input of a user.

Also, as technologies have developed, the size of the screen (for example, a display) of the electronic device has increased, gradually. Users may experience more realistic multimedia through a large screen, and may conveniently utilize various applications. The electronic device equipped with the large screen may readily acquire and record information.

The above information is presented as background information only to assist with an understanding of the present disclosure. No determination has been made, and no assertion is made, as to whether any of the above might be applicable as prior art with regard to the present disclosure.

### SUMMARY

As technologies have developed, the size of the screen (for example, a display) of an electronic device has increased, gradually. Users may experience more realistic multimedia through a large screen, and may conveniently utilize various applications. However, in the case where a smart electronic device (for example, a smart phone or a tablet Personal Computer (PC)) is operated with one hand, the user may be inconvenienced due to the large screen. For example, to use a predetermined function of an application, a user may need to touch the predetermined area of a touch screen. In this instance, the user needs to make a wide motion, which may be difficult due to the large screen. Accordingly, the user may need a more convenient User Interface (UI).

Also, recently, users have utilized various applications in an electronic device. Users use many of the utilized applications for the same purpose (for example, search engine portal applications (Naver, Daum, Chrome, or the like)). Although a plurality of applications are used for the identical purpose and include similar functions, the applications may be operated by different interfaces, respectively. That is, an electronic device may not provide an identical User Experience (UX) for the similar functions.

Aspects of the present disclosure are to address at least the above-mentioned problems and/or disadvantages and to provide at least the advantages described below. Accordingly, an aspect of the present disclosure is to provide a method of executing a function in response to a touch input and an electronic device implementing the same.

An electronic device, according to an aspect of the present disclosure displays, on a screen, a virtual button which is arbitrarily manipulated based on a manipulation environment of a user. A function, which corresponds to an activated first priority application, may be mapped to a virtual button. That is, an aspect of the present disclosure provides a user with a method and apparatus for conveniently executing a function of an electronic device, based on a virtual button corresponding to a first priority application.

In accordance with an aspect of the present disclosure, a method of executing a function in response to a touch input is provided. The method includes determining, by an electronic device, a first priority application among applications installed in the electronic device, mapping a function of the first priority application to a virtual button based on a predetermined touch input, recognizing the touch input on the virtual button that is displayed by a display module, and executing a function corresponding to the recognized touch input.

In accordance with another aspect of the present disclosure, an electronic device is provided. The electronic device includes a display module, a touch panel configured to recognize a touch input, a memory configured to have applications installed thereon, and a processor configured to determine a first priority application among the applications installed in the memory, to map a function of the first priority application to a virtual button based on a predetermined touch input, to recognize the touch input on the virtual button displayed by the display module, and to execute a function corresponding to the recognized touch input.

According to another aspect of the present disclosure, an electronic device displays, on a touch screen, a virtual button (contextual virtual UI (CVI)) which is conveniently usable, when a user uses a predetermined function. The electronic device may display, on the touch screen, the virtual button when the screen (for example, a display) is turned on. The electronic device may sense a touch input of a user on the displayed virtual button, and may execute a predetermined function in response to the sensed touch input. That is, the user may conveniently operate the electronic device using the virtual button.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram illustrating an electronic device according to an embodiment of the present disclosure;
FIG. 2 is a block diagram illustrating hardware according to an embodiment of the present disclosure;
FIG. 3 is a block diagram illustrating a programming module according to an embodiment of the present disclosure;
FIG. 4 is a flowchart illustrating an operation of executing a function in response to a touch input on a virtual button according to an embodiment of the present disclosure;
FIGS. 5A, 5B, 5C, 5D, and 5E are diagrams illustrating a virtual button according to various embodiments of the present disclosure;
FIG. 6 is a flowchart illustrating an operation of registering a type and a function of an application on a memory according to an embodiment of the present disclosure;
FIG. 7 is a diagram illustrating an operation of registering a type and a function of an application on a memory according to an embodiment of the present disclosure;
FIG. 8 is a flowchart illustrating an operation of mapping a function of a first priority application to each touch input, and executing a mapped function in response to a touch input according to an embodiment of the present disclosure; and
FIG. 9 is a diagram illustrating a method of executing a function of a first priority application that is mapped in advance, in response to a touch input of a user, according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Further, in the following description of the present disclosure, a detailed description of known functions and configurations incorporated herein will be omitted when it may make the subject matter of the present disclosure rather unclear. In the description below, only parts necessary for understanding operations according to various embodiments of the present disclosure will be described, and descriptions of other parts may be omitted so as to avoid unnecessarily obscuring the subject matter.

An electronic device according to the present disclosure may be a device including a communication function. For example, the electronic device may be one among various devices, such as a smart phone, a tablet Personal Computer (PC), a mobile phone, a video phone, a e-book reader, a desktop PC, a laptop PC, a net book computer, a Personal Digital Assistant (PDA), a Portable Multimedia Player (PMP), an MP3 player, a mobile medical device, an electronic bracelet, an electronic necklace, an electronic appcessory, a camera, a wearable device, an electronic clock, a wrist watch, a home appliance (for example, a refrigerator, an air-conditioner, a vacuum cleaner, an oven, a microwave oven, a washing machine, and an air cleaner), an artificial intelligence robot, a television (TV), a digital video disk (DVD) player, an audio player, various medical devices (for example, Magnetic Resonance Angiography (MRA), Magnetic Resonance Imaging (MRI), Computed Tomography (CT), a photographing device, and an ultrasonic device), a navigation device, a Global Positioning System (GPS) receiver, an Event Data Recorder (EDR), a Flight Data Recorder (FDR), a set-top box, a TV box (for example, Samsung HomeSync™, Apple TV™, or Google TV™), an electronic dictionary, a vehicle infotainment device, electronic equipment for ship (for example, a navigation device for ship and gyrocompass), an air electronic device (avionics), a security device, electronic clothes, an electronic key, a camcorder, a game console, a Head-Mounted Display (HMD), a flat panel display device, an electronic frame, an electronic album, furniture or a part of a building/structure including a communication function, an electronic board, an electronic signature receiving device, and a projector, or a combination thereof. The electronic device may embed at least one processor capable of performing a language translation function. Further, the electronic device may embed a module capable of outputting a translation result. The electronic device may include a speaker module capable of outputting the result value with a voice and a display module capable of outputting the result value with a text. It is apparent to those skilled in the art that the electronic device according to the present disclosure is not limited to the aforementioned devices.

An embodiment of the present disclosure is associated with a method and apparatus that receives a touch input (touch event) corresponding to a virtual button in an electronic device including a touch-based input interface (for example, a touch screen), and executes a function in response to the touch input.

According to an embodiment of the present disclosure, a virtual button (Contextual Virtual UI (CVI)) may be a semitransparent UI that always exists on a touch screen in any screen state switch.

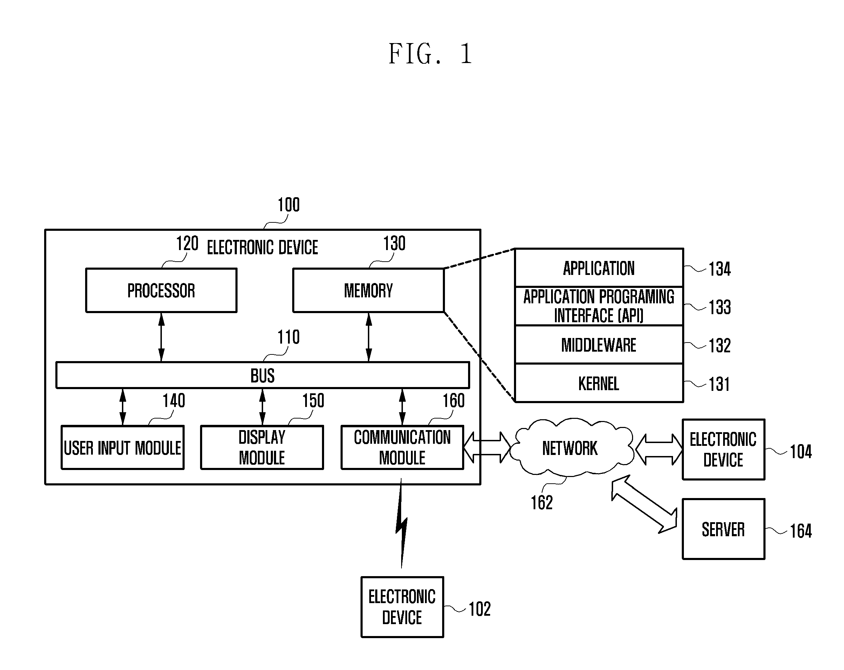

FIGS. 1 through 9, discussed below, and the various embodiments used to describe the principles of the present disclosure in this patent document are by way of illustration only and should not be construed in any way that would limit the scope of the disclosure. Those skilled in the art will understand that the principles of the present disclosure may be implemented in any suitably arranged communications system. The terms used to describe various embodiments are exemplary. It should be understood that these are provided to merely aid the understanding of the description, and that their use and definitions in no way limit the scope of the present disclosure. Terms first, second, and the like are used to differentiate between objects having the same terminology and are in no way intended to represent a chronological order, unless where explicitly stated otherwise. A set is defined as a non-empty set including at least one element.

FIG. 1 is a block diagram illustrating an electronic device according to an embodiment of the present disclosure.

Referring to FIG. 1, an electronic device 100 may include a bus 110, a processor 120, a memory 130, a user input module 140, a display module 150, or a communication module 160. The constituent elements of the electronic device 100 according to an embodiment of the present disclosure illustrated in FIG. 1 are not essential, so the electronic device 100 may be implemented with more constituent elements or fewer constituent elements. For example, when the electronic device 100 supports a photographing function, the electronic device may further include a configuration of a camera module, and when the electronic device does not support a broadcasting receiving function, some elements (for example, a broadcasting receiving module) of the wireless communication unit may be omitted.

The bus 110 may be a circuit connecting the aforementioned constituent elements to each other and transmitting communication (for example, a control message) between the aforementioned constituent elements.

For example, the processor 120 may receive instructions from aforementioned other constituent elements (for example, the memory 130, the user input module 140, the display module 150, and the communication module 160) through the bus 110, decipher the received instruction, and perform calculation or data processing according to the deciphered instruction.

The memory 130 may store an instruction or data received from the processor 120 or other constituent elements (for example, the user input module 140, the display module 150, and the communication module 160) or generated by the processor 120 or other constituent elements. The memory 130 may include programming modules, for example, a kernel 131, a middleware 132, an Application Programming Interface (API) 133, or an application 134. The aforementioned respective programming modules may be formed of software, firmware, or hardware, or a combination of at least two of software, firmware, and hardware.

The kernel 131 may control or manage system resources (for example, the bus 110, the processor 120, or the memory 121) used for executing an operation or a function implemented in the remaining programming modules, for example, the middleware 132, the API 133, or the application 134. Further, the kernel 131 may provide an interface through which the middleware 132, the API 133, or the application 134 may access and control or manage an individual constituent element of the electronic device 100.

The middleware 132 may serve as an intermediary so that the API 133 or the application 134 may transceive data while communicating with the kernel 131. Further, in relation to work requests received from the plurality of applications 134, the middleware 132 may perform load balancing on the work requests by using, for example, a method of assigning a priority for using the system resource (for example, the bus 110, the processor 120, or the memory 130) of the electronic device 100 to at least one application among the plurality of applications 134.

The API 133 is an interface through which the application 134 may control a function provided from the kernel 131 or the middleware 132, and may include at least one interface or function, for example, file control, window control, image processing, or character control.

The user input module 140 may, for example, receive an instruction or data from a user and transmit the received instruction or data to the processor 120 or the memory 130 through the bus 110. The processor 120 of the electronic device 100 according to the present disclosure may receive a touch input of the user through the user input module 140, and may execute a function corresponding to the touch input.

The display module 150 may display an image, a video, or data to a user. A panel of the display module 150 may include a touch panel. The processor 120 of the electronic device 100 according to the present disclosure may determine a first priority application among the applications displayed through the display module 150. The first priority application may be an application that is displayed on the uppermost layer of the display module 150.

The communication module 160 may connect communication between another electronic device 102 and the electronic device 100. The communication module 160 may support a predetermined near field communication protocol (for example, Wireless Fidelity (WiFi), Bluetooth (BT), Near Field Communication (NFC)) or predetermined network communication 162 (for example, Internet, a Local Area Network (LAN), a Wide Area Network (WAN), a telecommunication network, a cellular network, a satellite network, or a Plain Old Telephone Service (POTS)). Each of electronic devices 102 and 104 may be the same as (for example, the same type) or different (for example, a different type) from the electronic device 100. The communication module 160 may also communicate to a server 164 using the predetermined network communication 162.

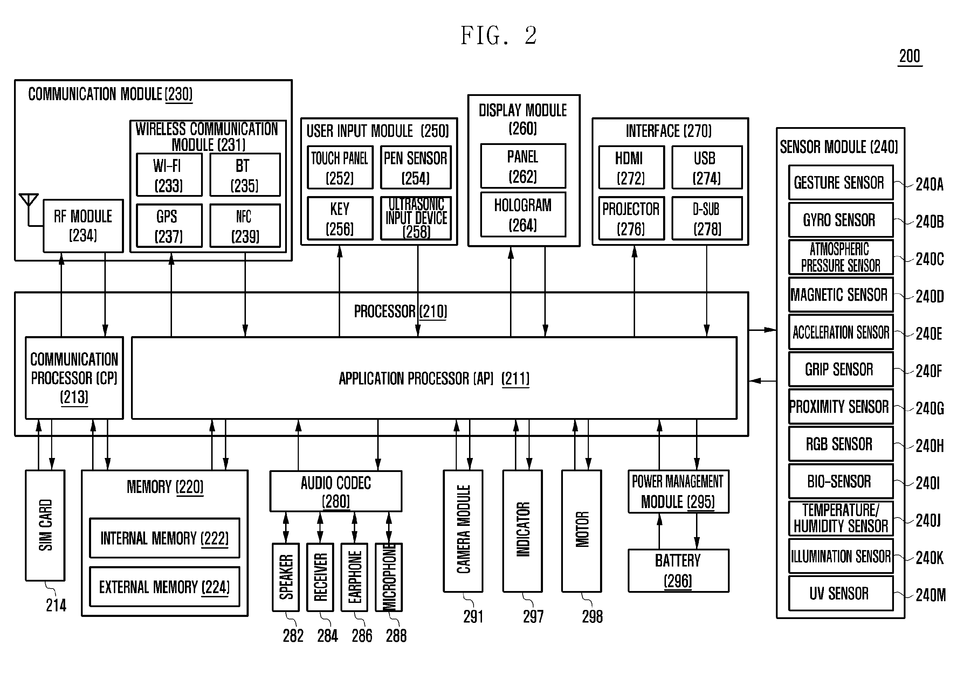

FIG. 2 is a block diagram illustrating hardware according to an embodiment of the present disclosure.

Referring to FIG. 2, hardware 200 may be, for example, the electronic device 100 illustrated in FIG. 1. Furthermore, referring to FIG. 2, the hardware 200 may include one or more processors 210, a Subscriber Identification Module (SIM) card 214, a memory 220, a communication module 230, a sensor module 240, a user input module 250, a display module 260, an interface 270, an audio codec 280, a camera module 291, a power management module 295, a battery 296, an indicator 297, or a motor 298.

The processor 210 (for example, the processor 120) may include one or more Application Processors (AP) 211, one or more Communication Processors (CP) 213. The processor 210 may be, for example, the processor 120 illustrated in FIG. 1. As illustrated in FIG. 2, the AP 211 and the CP 213 are included in the processor 210, but the AP 211 and the CP 213 may be included in different Integrated Circuit (IC) packages, respectively. In an embodiment of the present disclosure, the AP 211 and the CP 213 may be included in one IC package.

The AP 211 may control a plurality of hardware or software elements connected to the AP 211 by driving an operating system or an application program, and perform processing and calculation on various data including multimedia data. The AP 211 may be implemented as, for example, a System on Chip (SoC). According to an embodiment of the present disclosure, the processor 210 may further include a Graphic Processing Unit (GPU) (not shown).

The CP 213 may perform a function of managing a data link in communication between the electronic device (for example, the electronic device 100) including the hardware 200 and another electronic device connected through the network and converting a communication protocol. The CP 213 may be implemented as, for example, an SoC. According to an embodiment of the present disclosure, the CP 213 may perform at least a part of a multimedia control function. The CP 213 may perform discrimination and authentication of a terminal within a communication network by using, for example, a subscriber identification module (for example, the SIM card 214). Further, the CP 213 may provide the user with services, such as voice call, video call, a text message, or packet data.

Further, the CP 213 may control data transception of the communication module 230. As illustrated in FIG. 2, the constituent elements, such as the CP 213, the power management module 295, or the memory 220 are separate from the AP 211, but according to an embodiment of the present disclosure, the AP 211 may be implemented so as to include at least a part (for example, the CP 213) of the aforementioned constituent elements.

According to an embodiment of the present disclosure, the AP 211 or the CP 213 may load an instruction or data received from a nonvolatile memory connected to the AP 211 or the CP 213 or at least one of other constituent elements in a volatile memory and process the instruction or the data. Further, the AP 211 or the CP 213 may store data received from at least one of other constituent elements or generated by at least one of other constituent elements in the nonvolatile memory.

The SIM card 214 may be a card implementing a subscriber identification module, and may be inserted into a slot formed at a specific position of the electronic device. The SIM card 214 may include unique identification information (for example, an Integrated Circuit Card Identifier (ICCID) or an International Mobile Subscriber Identity (IMSI)).

The memory 220 may include an internal memory 222 or an external memory 224. The memory 220 may be, for example, the memory 130 illustrated in FIG. 1. The internal memory 222 may include at least one among, for example, a volatile memory (for example, a Dynamic Random Access Memory (DRAM), a Static RAM (SRAM), and a Synchronous DRAM (SDRAM)) and a nonvolatile memory (for example, a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a NAND flash memory, and a NOR flash memory). According to an embodiment of the present disclosure, the internal memory 222 may also have a type of a Solid State Drive (SSD). The external memory 224 may further include a flash drive, for example, Compact Flash (CF), Secure Digital (SD), Micro-Secure Digital (Micro-SD), Mini-Secure Digital (mini-SD), extreme Digital (xD), or a memory stick.

When an application is installed, the processor 210 of the electronic device 200 may store, in the memory 220, information associated with a type and a function of the application, together with the application, according to an embodiment of the present disclosure. The processor 210 of the electronic device 200 may store a program that may utilize the type and the function of the application, in the memory 220. The processor 210 of the electronic device 200 may register information associated with the type and the function of the application, on the program. For example, when a browsing application is installed, the processor 210 may determine information associated with the type and the function of the corresponding application, and register the information on a predetermined program.

The communication module 230 may include a wireless communication module 231 or an RF module 234. The communication module 230 may be, for example, the communication module 160 illustrated in FIG. 1. The wireless communication module 231 may include, for example, WiFi 233, BT 235, GPS 237, or NFC 239. For example, the wireless communication module 231 may provide a wireless communication function by using a wireless frequency. In addition, the wireless communication module 231 may include a network interface (for example, a LAN card) or a modem for connecting the hardware 200 with a network (for example, the Internet, the LAN, the WAN, the telecommunication network, the cellular network, the satellite network, or the POTS).

The RF module 234 may serve to transceive data, for example, an RF signal or a called electronic signal. Although the RF module 234 is not illustrated, the RF module 234 may include, for example, a transceiver, a Power Amp Module (PAM), a frequency filter, or a Low Noise Amplifier (LNA). Further, the RF module 234 may further include a component, such as a conductor or a conductive line, for transceiving electromagnetic waves in a free space in wireless communication.

The communication module 230 may establish a communication channel for a voice call, establish a communication channel for a video call, and establish a communication channel (hereinafter, a data communication channel) for transmission of data such as an image, a message, and the like, under a control of the AP 211. In particular, the communication module 230 of the present disclosure may map functions of the first priority application to different touch inputs through the data communication channel.

The sensor module 240 may include at least one of, for example, a gesture sensor 240A, a gyro sensor 240B, an atmospheric pressure sensor 240C, a magnetic sensor 240D, an acceleration sensor 240E, a grip sensor 240F, a proximity sensor 240G, a Red, Green, Blue (RGB) sensor 240H, a biometric (bio) sensor 240I, a temperature/humidity sensor 240J, an illuminance (illumination) sensor 240K, and an Ultra Violet (UV) sensor 240M. The sensor module 240 may measure a physical quantity or detect an operation state of the electronic device, and convert the measured or detected information into an electrical signal. In addition, the sensor module 240 may include, for example, an E-nose sensor (not shown), an ElectroMyoGraphy (EMG) sensor (not shown), an ElectroEncephaloGram (EEG) sensor (not shown), an ElectroCardioGram (ECG) sensor (not shown), or a fingerprint sensor. The sensor module 240 may further include a control circuit for controlling one or more sensors included therein.

The user input module 250 may include a touch panel 252, a (digital) pen sensor 254, a key 256, or an ultrasonic wave input device 258. The user input module 250 may be, for example, the user input module 140 illustrated in FIG. 1. The touch panel 252 may recognize a touch input by at least one method of, for example, a capacitive method, a resistive method, an infrared ray method, and an ultrasonic wave method. Further, the touch panel 252 may further include a controller (not shown). In a case of the capacitive method, the touch panel 252 may recognize a proximity touch, as well as a direct touch. The touch panel 252 may further include a tactile layer. In this case, the touch panel 252 may provide the user with a tactile response.

The (digital) pen sensor 254 may be implemented by a method identical or similar to the reception of a touch input of the user or by using a separate sheet for recognition. The key 256 may adopt, for example, a keypad or a touch key. The ultrasonic wave input device 258 is a device capable of detecting sound waves through a microphone (for example, microphone 288) in a terminal through a pen generating an ultrasonic wave signal and identifying data, and may perform wireless recognition. According to an embodiment of the present disclosure, the hardware 200 may receive a user input from an external device (for example, a network, a computer, or a server) connected with the communication module 230 through the communication module 230.

The display module 260 may include a panel 262 or a hologram 264. The display module 260 may be, for example, the display module 150 illustrated in FIG. 1. The panel 262 may be, for example, a Liquid Crystal Display (LCD) or an Active Matrix Organic Light Emitting Diode (AM-OLED). The panel 262 may be, for example, flexibly, transparently, or wearably implemented. The panel 262 may be formed in one module with the touch panel 252. The hologram 264 may show a three-dimensional (3D) image in the air by using interference of light. According to an embodiment of the present disclosure, the display module 260 may further include a control circuit for controlling the panel 262 or the hologram 264.

The interface 270 may include, for example, a High Definition Multimedia Interface (HDMI) 272, a Universal Serial Bus (USB) 274, a projector 276, or a D-subminiature (D-sub) 278. In addition, the interface 270 may include, for example, SD/Multi-Media Card (MMC) (not shown) or Infrared Data Association (IrDA) (not shown).

The audio codec 280 may bilaterally convert a voice and an electrical signal. The audio codec 280 may convert voice information input or output through, for example, a speaker 282, a receiver 284, an earphone 286, or the microphone 288. According to an embodiment of the present disclosure, the processor 210 may confirm that the number of languages is two or more based on voice information about a first user using a first language preset by the user and a second user using a second language. When the number of languages received from the audio codec is two or more, the processor 210 may execute a language translation program and application, and translate the second language to the first language to output the translated first language. Further, when the number of languages received from the audio codec is three or more, the processor 210 may set the second language according to a specific condition (for example, a language having a largest ratio within a predetermined time) by using an audio module.

The camera module 291 is a device capable of photographing an image and a video, and according to an embodiment of the present disclosure, may include one or more image sensors (for example, a front lens or a rear lens), an Image Signal Processor (ISP) (not shown), or a flash LED (not shown).

The power management module 295 may manage power of the hardware 200. Although it is not illustrated, the power management module 295 may include, for example, a Power Management Integrated Circuit (PMIC), a charger IC, or a battery fuel gauge.

The PMIC may be mounted within, for example, an IC or an SoC semiconductor. A charging manner may be divided into a wired manner or a wireless manner. The charger IC may charge the battery, and prevent an inflow of overvoltage or overcurrent from a charger. According to an embodiment of the present disclosure, the charger IC may include a charger IC for at least one of a wired charging manner or a wireless charging manner. The wireless charging manner may include, for example, a magnetic resonance manner, a magnetic induction manner, or an electromagnetic wave manner, and may additionally include an additional circuit for wireless charging, for example, a coil loop, a resonant circuit, and a rectifier.

The battery fuel gauge may measure, for example, a residual quantity, a voltage during charging, a current, or a temperature of the battery 296. The battery 296 may generate electricity and supply a power source, and may be, for example, a rechargeable battery.

The indicator 297 may display a specific state, for example, a booting state, a message state, or a charging state, of the hardware 200 or a part of the hardware 200 (for example, the AP 211). The motor 298 may convert an electrical signal into a mechanical vibration. A Multi-Point Control Unit (MCU) (not shown) may control the sensor module 240.

Although it is not illustrated, the hardware 200 may include a processing device (for example, the GPU) for supporting a mobile TV. The processing device for supporting the mobile TV may process media data according to a standard of, for example, Digital Multimedia Broadcasting (DMB), Digital Video Broadcasting (DVB), or multimedia flow. According to an embodiment of the present disclosure, each of the aforementioned constituent elements of the hardware may be formed of one or more components, and a name of a corresponding constituent element may be changed according to the kind of electronic device. According to an embodiment of the present disclosure, the hardware may be formed of at least one among the aforementioned constituent elements, and some constituent elements may be omitted or other additional constituent elements may be included in the hardware. Further, according to an embodiment of the present disclosure, some of the constituent elements of the hardware are combined to form one entity, so that the functions of the corresponding constituent elements before the combination may be equally performed.

The term "module" used in an embodiment of the present disclosure may mean, for example, a unit including one or a combination of two or more of hardware, software, and firmware. The "module" may be interchangeably used with a term, such as a unit, logic, a logical block, a component, or a circuit. The "module" may be a minimum unit or a part of an integrally formed component. The "module" may be a minimum unit performing one or more functions or a part thereof. The "module" may be mechanically or electronically implemented. For example, according to an embodiment of the present disclosure, the "module" may include at least one of an already known or to-be-developed Application Specific integrated Circuit (ASIC) chip, Field Programmable Gate Arrays (FPGAs), and a programmable logic device performing certain operations.

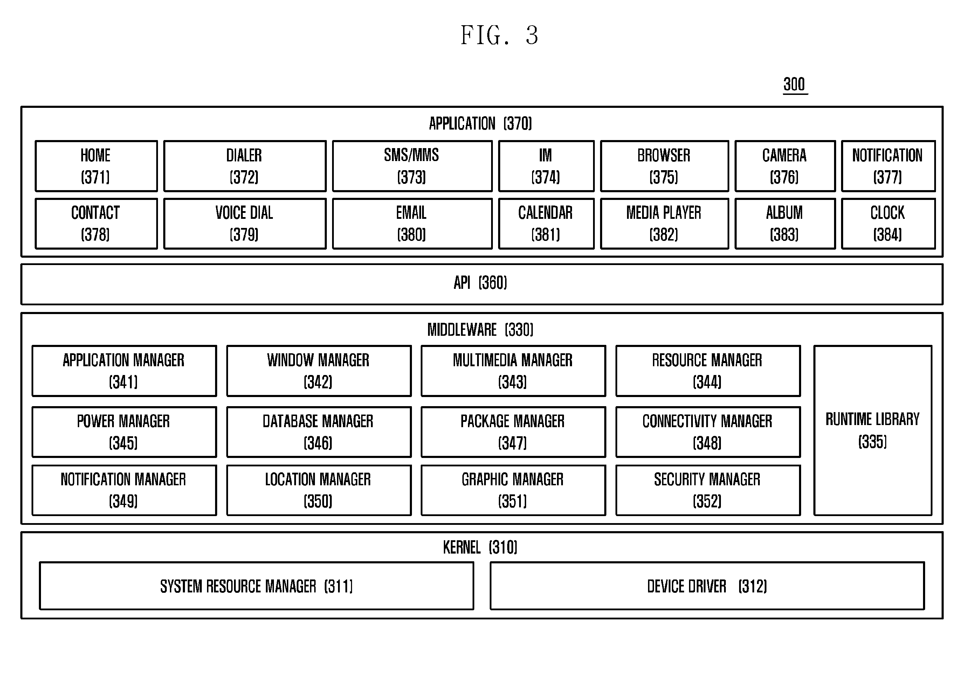

FIG. 3 is a block diagram illustrating a programming module according to an embodiment of the present disclosure.

Referring to FIG. 3, a programming module 300 is illustrated, where the programming module 300 may be included (for example, stored) in the electronic device 100 (for example, the memory 130) illustrated in FIG. 1. At least a part of the programming module 300 may be formed of software, firmware, or hardware, or a combination of two or more of software, firmware, and hardware. The programming module 300 may include an Operating System (OS) implemented in the hardware (for example, the hardware 200) to control a resource related to the electronic device (for example, the electronic device 100) or various applications (for example, an application 370) driven on the operating system. For example, the OS may be Android, iOS, Windows, Symbian, Tizen, or Bada. Referring to FIG. 3, the programming module 300 may include a kernel 310, middleware 330, an Application Programming Interface (API) 360, or the application 370.

The kernel 310 (for example, the kernel 131) may include a system resource manager 311 or a device driver 312. The system resource manager 311 may include, for example, a process manager, a memory manager, or a file system manager. The system resource manager 311 may perform control, allocation, or collection of a system resource. The device driver 312 may include, for example, a display driver, a camera driver, a Bluetooth driver, a shared memory driver, a USB driver, a keypad driver, a WiFi driver, or an audio driver. Further, according to an embodiment of the present disclosure, the device driver 312 may include an Inter-Process communication (IPC) driver (not shown).

The middleware 330 may include a plurality of modules pre-implemented in order to provide a function commonly required by the application 370. Further, the middleware 330 may provide a function through the API 360 so as for the application 370 to efficiently use a limited system resource inside the electronic device. For example, as illustrated in FIG. 3, the middleware 330 (for example, the middleware 132) may include at least one of a run time library 335, an application manager 341, a window manger 342, a multimedia manager 343, a resource manager 344, a power manager 345, a database manager 346, a package manager 347, a connectivity manager 348, a notification manager 349, a location manager 350, a graphic manager 351, and a security manager 352.

The run time library 335 may include, for example, a library module used by a compiler in order to add a new function through a programming language during the execution of the application 370. According to an embodiment of the present disclosure, the run time library 335 may perform a function for input/output, memory management, or a calculation function.

The application manager 341 may manage, for example, a life cycle of at least one application in the application 370. The window manager 342 may manage a Graphical User Interface (GUI) resource used in a screen. The multimedia manager 343 may recognize a format necessary for reproducing various media files, and perform encoding or decoding of a media file by using a codec appropriate to a corresponding format. The resource manager 344 may manage a resource, such as a source code, a memory, or a storage space, of at least one application in the application 370.

The file manager 345 may be operated together with a Basic Input/Output System (BIOS) and the like to manage a battery or a power, and provide power information necessary for the operation. The database manager 346 may manage the database so as to generate, search, or change a database to be used in at least one application in the application 370. The package manager 347 may manage installation or update of an application distributed in a form of a package file.

The connectivity manager 348 may manage wireless connection, such as WiFi or Bluetooth. The notification manager 349 may display or notify an event, such as an arrival message, an appointment, or proximity notification, to the user in a non-disturbed manner. The location manager 350 may manage location information about the electronic device. The graphic manager 351 may manage a graphic effect to be provided to the user or a user interface related to the graphic effect. The security manager 352 may provide a security function necessary for system security or user authentication. According to an embodiment of the present disclosure, in a case where the electronic device (for example, the electronic device 100) includes a call function, the middleware 330 may further include a telephony manager (not shown) for managing a voice or video call function of the electronic device.

The middleware 330 may generate a new middleware module through a combination of various functions of the aforementioned internal constituent element modules and use the generated new middleware module. The middleware 330 may provide a module specialized for each type of the OS in order to provide a differentiated function. Further, some of existing constituent elements may be dynamically deleted or new constituent elements may be added to the middleware 330. Accordingly, some of the constituent elements described in an embodiment of the present disclosure may be omitted, other constituent elements may be further included, or the constituent element may be substituted with a constituent element performing a similar function but having a different name.

The API 360 (for example, the API 133) is a set of API programming functions, and may be provided with different configurations according to the OS. For example, in a case of the Android or iOS, one API set may be provided for each platform, and in a case of the Tizen, two or more API sets may be provided.

The application 370 (for example, the application 134) may include, for example, a preloaded application or the third party application.

At least a part of the programming module 300 may be implemented by an instruction stored in a computer readable storage media. In a case where the instruction is executed by one or more processors (for example, the processor 210), the one or more processors may perform a function corresponding to the instruction. The computer readable storage media may be, for example, the memory 220. At least a part of the programming module 300 may be implemented (for example, executed) by, for example, the processor 210. At least a part of the programming module 300 may include, for example, a module, a program, a routine, a set of instructions, and/or a process for performing one or more functions.

In various embodiments of the present disclosure, names of the constituent elements of the programming module (for example, the programming module 300) may be changed according to the type of OS. According to an embodiment of the present disclosure, the programming module may include at least one of the aforementioned constituent elements, some of the aforementioned constituent elements may be omitted, or the programming module may further include other additional constituent elements. According to an embodiment of the present disclosure, the programming module or operations performed by other constituent elements may be processed by a sequential, parallel, repeated, or heuristic method, and further, some operations may be omitted or another operation may be added.

Furthermore, referring to FIG. 3, the application 370 may include any of a home application 371, a dialer application 372, a Short Messaging Service (SMS)/Multimedia Messaging Service (MMS) application 373, an Instant Messaging (IM) application 374, a browser application 375, a camera application 376, a notification application 377, a contact application 378, a voice dial application 379, an email application 380, a calendar application 381, a media player application 382, an album application 383 and a clock application 384.

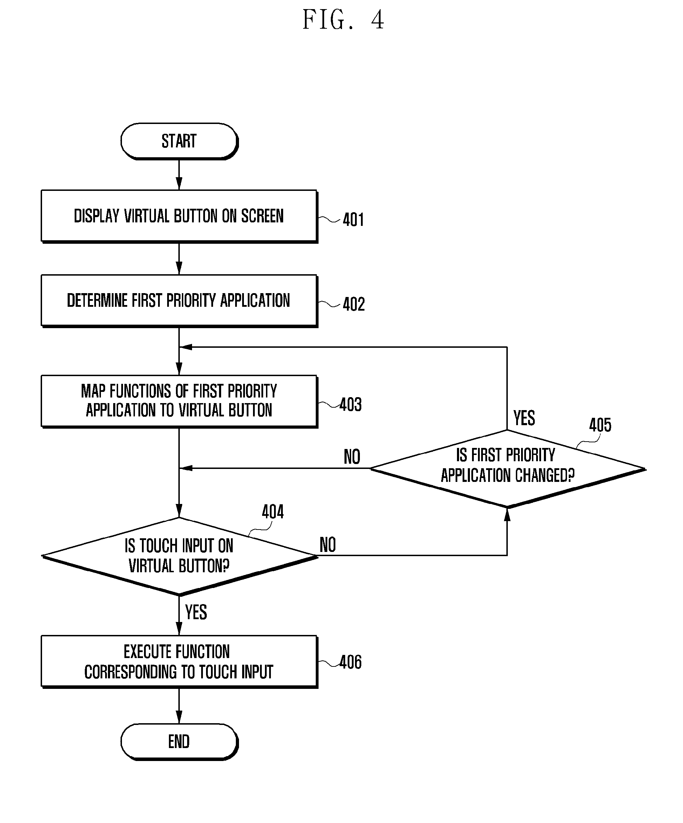

FIG. 4 is a flowchart illustrating an operation of executing a function in response to a touch input on a virtual button according to an embodiment of the present disclosure.

Referring to FIG. 4, the processor 210 of the electronic device 200 may display a virtual button on a screen (for example, the panel 262) through the display module, in operation 401. Here, the screen of the electronic device 200 may be the touch panel 252 that includes at least one display. The virtual button may be always displayed on the screen, irrespective of a current task state. For example, excluding the state in which the screen of the electronic device 200 is turned off, the virtual button may be displayed on the screen in all states that the screen of the electronic device 200 is turned on, including an idle state, a state of executing a predetermined application, a state of executing Internet search, and the like. The virtual button is semitransparent basically, and the processor 210 may change a degree of transparency of the virtual button (for example, a degree of transparency), based on the settings by a user, or may terminate the virtual button. The processor 210 may freely change outward factors of the virtual button, such as, a size, a location, a color, or the like, based on the settings by the user. That is, the user may use the virtual button by setting the virtual button to be appropriate for the usage environment of the user. For example, when a finger of the user is thick, the user may set the size of the virtual button to be large. The user may set the location of the virtual button, based on which of the left hand or the right hand is frequently used by the user. In operation 402, the processor 210 may determine a current first priority application of the electronic device. For example, the first priority application may be an application that the user directly utilizes from among applications, which are currently activated in the electronic device 200. The processor 210 may determine a foreground application that is displayed on the uppermost layer of the screen through the display module 260, as the first priority application. Also, when the processor 210 plays back media (for example, audio, video, or the like), an application that plays back the media may be determined to be the first priority application. In operation 403, the processor 210 may map functions of the first priority application onto touch inputs, respectively. For example, when the first priority application corresponds to a search portal application, functions such as "backward," "forward," "bookmark," and the like may be mapped based on the virtual button. The processor 210 may classify the application by a type (for example, a game, a search portal, or music), and functions of the application mapped to the virtual button may be different based on the type of application. In operation 404, the processor 210 may determine whether a touch input of a user, which is input onto the virtual button, is input. In operation 404, the processor 210 may determine whether a touch input of a user is input, during a predetermined period of time. Here, the touch input of the user may be a predetermined motion of the user, which is registered in advance. For example, the touch input of the user may be a touch input, such as, touching the screen twice, touching the screen for a long duration, sliding(swiping, flicking) to the left side from the center of the virtual button (for example, a left gesture), sliding(swiping, flicking) to the right side (for example, a right gesture), sliding(swiping, flicking) in the upper direction, sliding(swiping, flicking) in the lower direction, holding a touch during a predetermined time, and the like. In addition, when the user inputs the touch input of "touching the screen twice" or "touching the screen for a long duration," the processor 210 displays a guide screen on the top, bottom, left, and right of the virtual button. And the processor 210 can identify the continuously inputted top, bottom, left, and right touch inputs of the user corresponding to the displayed guide screen. The displayed guide screen can be an application program or a function provided by an electronic device. The touch input of the user can be mapped beforehand by the application developer or can be randomly mapped by the user. When the processor 210 determines the touch input of the user in operation 404 (e.g., YES in operation 404), the processor 210 may execute a function that is mapped to correspond to the touch input in operation 406. The function mapped to the touch input can be mapped beforehand by the application developer or can be randomly mapped by the user. For example, functions randomly mapped by the user can include "force stop application," "screen capture," "transition to the application used previously," "transition to the application to be used next," "transition to the mini mode," "transition to the right hand mode," and "transition to the left hand mode." When the processor 210 fails to determine the touch input of the user in operation 404 (e.g., NO in operation 404), the processor 210 may determine whether the first priority application is changed in operation 405. For example, the processor 210 may determine whether the first priority application is changed, based on a foreground application displayed on the uppermost layer of the screen. When the processor 210 fails to determine whether the first priority application is changed in operation 405 (e.g., NO in operation 405), the processor 210 may return to operation 404, so as to determine whether a touch input of the user, which is input onto the virtual button, is input. When the processor 210 determines that the first priority application is changed in operation 405 (e.g., YES in operation 405), the processor 210 may map, again, functions corresponding to the changed first priority application to touch inputs according to operation 403. The described mapped functions may be one of the functions of a predetermined application, or may be a function commonly associated with applications (for example, calling or sending a message). Here, the processor 210 may map the function commonly associated with the applications, to another predetermined touch input. Also, the mapped functions may be an execution function (for example, multi-tasking) that enables the processor 210 to execute a new application while the processor 210 does not terminate the first priority application. According to an embodiment of the present disclosure, the processor 210 in the electronic device classifies applications by a type, and groups the applications based on the classification (for example, applications for the purpose of web browsing (a search portal application) such as Daum, Naver, Chrome, Safari, and the like). The processor 210 may map an identical touch input based on the function of the grouped applications. For example, the search portal applications may commonly execute a function, such as, "backward," "forward," or the like. The processor 210 may group the search portal applications, and a commonly identical function of the grouped applications may be mapped to an identical touch input. In this manner, the user may unify the UX in association with the grouped applications. For example, when "sliding to the left side" from the center of the virtual button is determined, all of the grouped search portable applications may execute a function of "backward." That is, the processor 210 may conveniently execute the identical function of the grouped applications through an identical input. Here, grouping may be determined when an application is installed in the electronic device, or may be arbitrarily determined based on the settings by a user. Alternatively, it may be determined in advance by a producer.

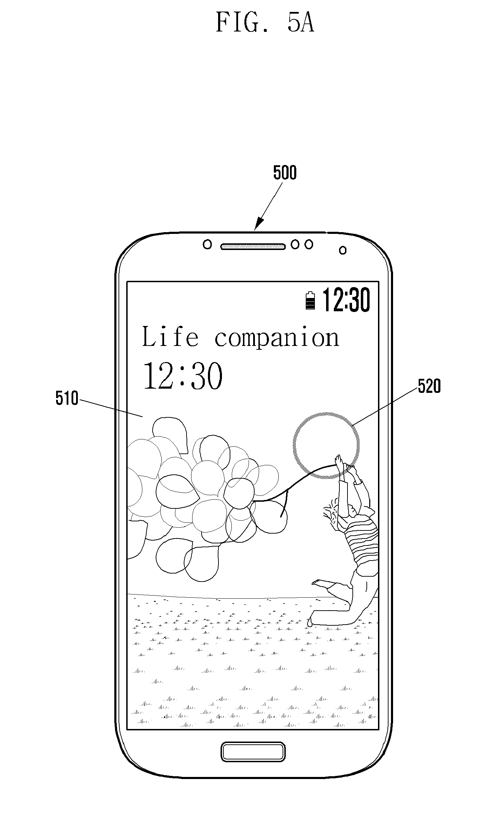

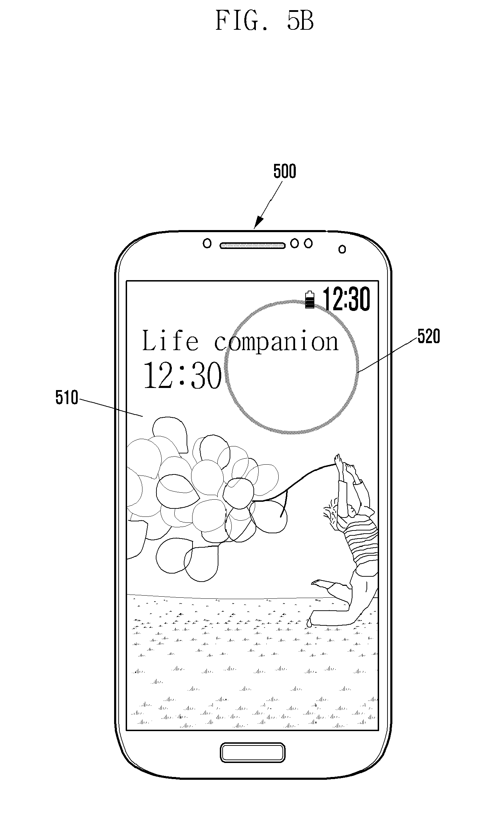

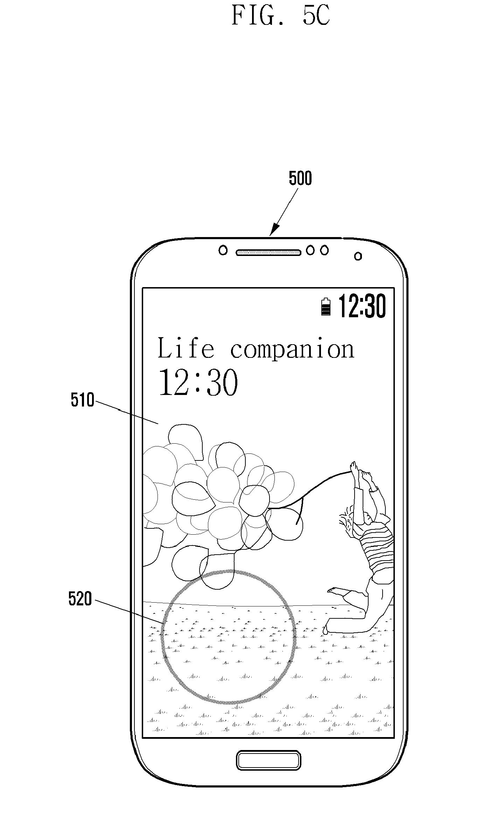

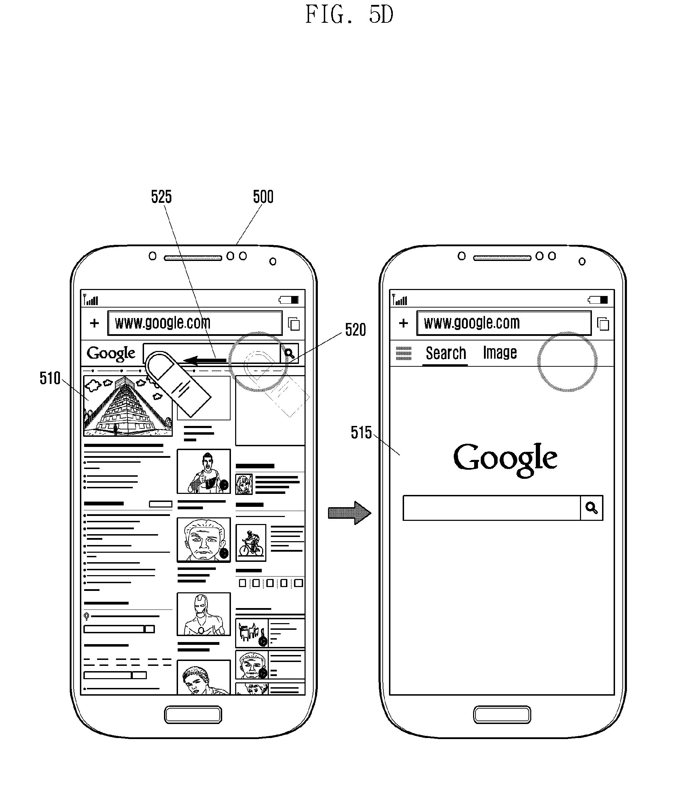

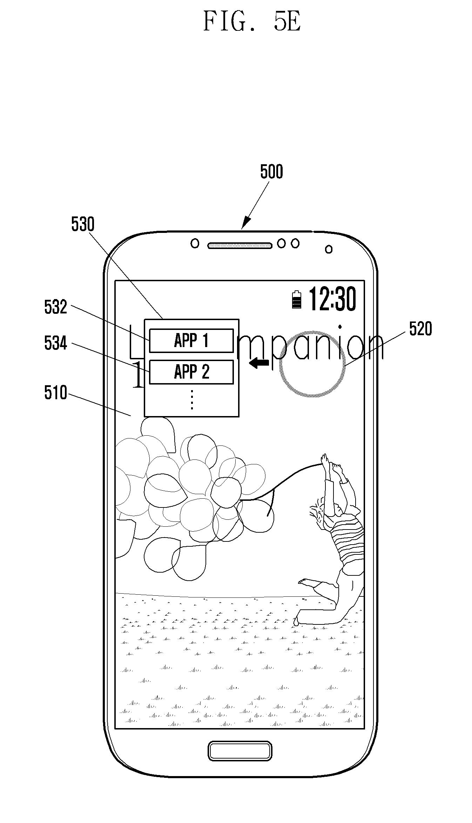

FIGS. 5A, 5B, 5C, 5D, and 5E are diagrams illustrating a virtual button according to various embodiments of the present disclosure.

Referring to FIG. 5A, the processor 210 may display a virtual button 520 on a display 510 of an electronic device 500 (for example, the electronic device 200 of FIG. 2). Excluding the state in which the display 510 of the electronic device 500 is turned off, the processor 210 may always display the virtual button 520 on the display 510 of the electronic device 500. That is, the processor 210 may control the display module 260 to always display the virtual button 520 on an uppermost layer of the display 510. Further, the processor 210 may change the degree of transparency of the virtual button 520, based on settings set by a user. Also, the processor 210 may change the outward factors of the virtual button 520, such as, a size, a location, a color, or the like, based on the settings set by the user. Also, the processor 210 may terminate the virtual button 520 when the user does not desire the virtual button 520.

Referring to FIG. 5B, the processor 210 may freely set the size of the virtual button 520 on the display 510 of the electronic device 500, based on the settings set by the user. For example, the processor 210 may freely adjust the size of the virtual button 520 based on the characteristics (for example, a left-hander or a right-hander) and habits of the user. Accordingly, the user may conveniently utilize the virtual button 520 according the usage environment of the user.

Referring to FIG. 5C, the processor 210 may freely set the location of the virtual button 520 on the display 510 of the electronic device 500, based on the settings set by the user. Accordingly, the user may further conveniently utilize the virtual button 520. The user may minimize the restriction on the use of electronic device 500, caused by the size of the screen of the electronic device 500. For example, when the screen of the electronic device 500 is large, in comparison with the size of a hand of the user, the user may have difficulty in touching the screen of the electronic device 500, overall. In this case, the user may adjust the size and the location of the virtual button 520, and readily use the electronic device 500. Further, the user may reduce inconvenience, caused by the personal habits (for example, a left-hander or a right-hander), when the user uses the virtual button 520.

Referring to FIG. 5D, the processor 210 determines a touch input 525 of the user input onto the virtual button 520, and may execute a function corresponding to the touch input 525. For example, when a web browsing task is a first priority application in the electronic device, 500, the display 510 of the electronic device 500 may display the state of web browsing. The processor 210 of the electronic device 500 may determine the first priority application, and map functions corresponding to the application to the virtual button 520. For example, when the web browsing task is the first priority application, the processor 210 may map a function of "backward" with respect to a touch input that moves to the left side from the center of the virtual button 520. A motion 525 shows a motion of a user touch input that moves to the left side from the center of the virtual button 520. The processor 210 determines the user touch input, and may execute a function of "backward" for returning to a previous screen 515 of the existing web browsing screen 510. Also, the processor 210 may map a function of the first priority application with respect to each touch input that moves in the lower direction, in the upper direction, and to the right side from the center of the virtual button 520. The processor 210 may execute mapping so that an identical function is executed in response to an identical touch input, with respect to grouped applications.

Referring to FIG. 5E, the processor 210 may execute a predetermined function of an application, and may also pop up a new window 530 to execute other applications 532 and 534 in response to a touch input. For example, the processor 210 may pop up the new window 530 in response to "sliding to the left side," based on the settings by the user. When a user touch input corresponding to the "sliding to the left side" is determined in the virtual button 520, the processor 210 may pop up the new window 530 in the left portion of the screen 510. Here, the new window 530 may be a predetermined folder stored in a memory. The processor 210 may execute other applications 532 and 534 using the new window 530. Further, although not illustrated, when the processor 210 recognizes a user touch input corresponding to "sliding to the lower direction" in the virtual button 520, the processor 210 may pop up a new window in the lower portion of the screen 510 and display various functions. For example, the processor 210 may display a function that is commonly associated with the applications of the electronic device 500 (for example, making a call, sending a message, and an emergency call). Further, the processor 210 may group Explorer, Chrome, and Safari as a browser group. The processor 210 of the electronic device 500 may configure grouped applications (for example, music applications) as the new window. Further, the processor 210 may enable a function that is commonly used in grouped applications to be executed in response to an identical motion.

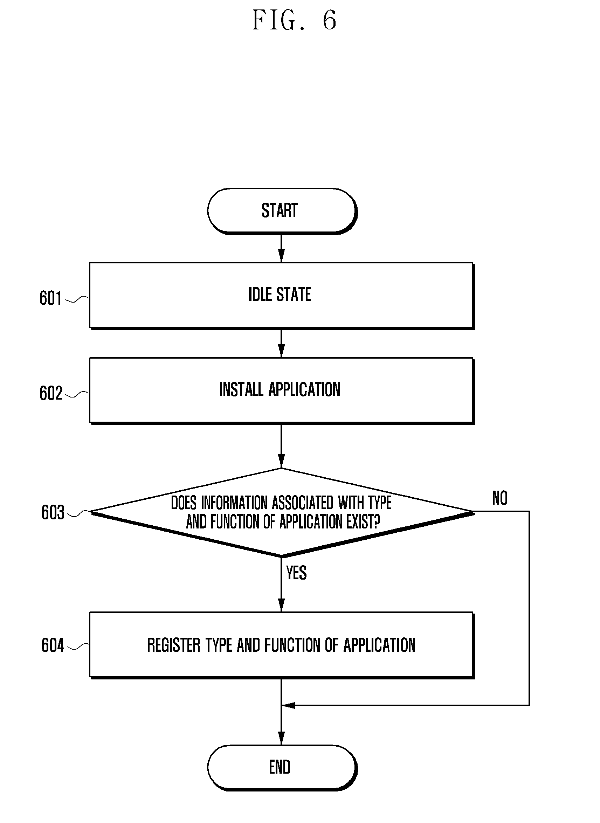

FIG. 6 is a flowchart illustrating an operation of registering a type and a function of an application on a memory according to an embodiment of the present disclosure. For example, an electronic device according to an embodiment of the present disclosure may classify a type and a function of an application in advance. When the application is installed, the electronic device may execute an operation set in advance.

Referring to FIG. 6, the processor 210 is in an idle state in operation 601. For example, the idle state refers to the state in which the processor 210 does not execute a predetermined function. In operation 602, the processor 210 may install an application. In operation 603, the processor 210 may determine the type of the installed application. For example, the processor 210 may receive information associated with a type of an application, set by a producer of the corresponding application when the application is installed. The application producer may set the information associated with the type and the function of the application to be transmitted to the electronic device when installing the application. When the type of the installed application is not determined in operation 603 (e.g., the information associated with the type and function of the application does not exist), the processor 210 may install the application without registering the type and the function of the application. When the processor 210 determines the type of the application in operation 603 (e.g., the information associated with the type and function of the application does exist), the processor 210 may register the type and the function of the application in operation 604. As described above, when the application is installed, the processor 210 may determine information associated with a type and a function of an installed application, and register the information corresponding to the application. For example, when a predetermined application is a first priority application, the processor 210 may map functions of the predetermined application to a virtual button based on information registered in advance.

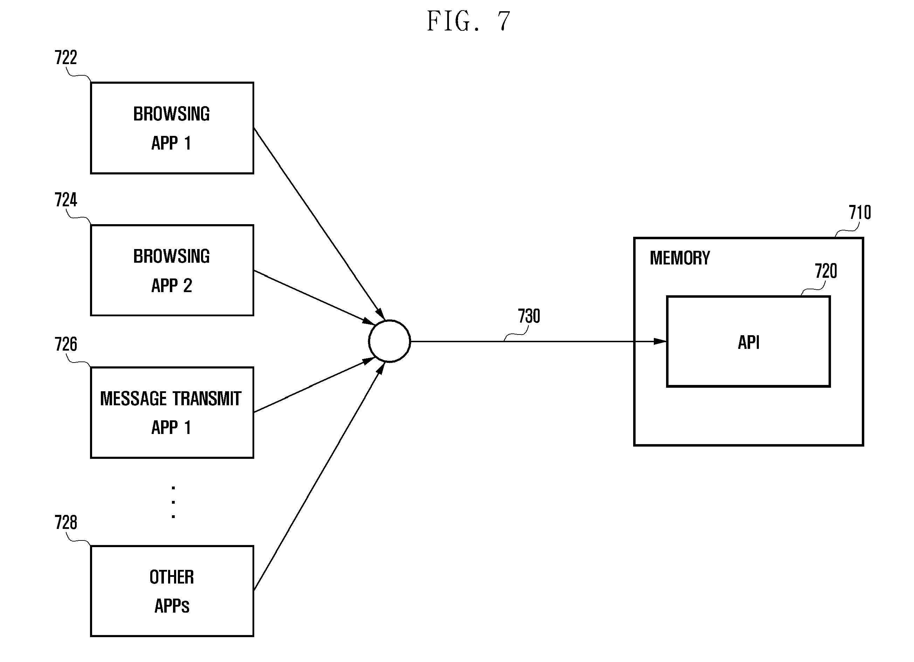

FIG. 7 is a diagram illustrating an operation of registering a type and a function of an application on a memory according to an embodiment of the present disclosure.

Referring to FIG. 7, a memory 710 may include an API 720 associated with a virtual button. Here, the memory 710 may be the memory 220 of FIG. 2. The processor 210 may register a type and a function of each application on the API 720. For example, in operation 730, the processor 210 of the electronic device 200 may register, on the API 720, information associated with a browsing application 1 722, information associated with a browsing application 2 724, information associated with a message transmit application 1 726, and the like 728. Here, each application information may be information associated with a type and a function of each application. For example, the browsing application 1 722 may be one of the search portal applications. When the browsing application 1 722 is capable of executing a function such as "backward," "forward," "recent search history," and the like, the processor 210 may register the functions to correspond to the browsing application 1 722. The processor 210 may determine a first priority application. The processor 210 may determine whether the first priority application is registered, and may load the functions corresponding to the application when the application is registered. For example, when the browsing application 1 722 is the first priority application, the processor 210 maps the functions registered to correspond to the browsing application 1 722 to the virtual button, and enables the registered functions to be executed in response to a user touch input.

Also, the processor 210 may group applications by a type (for example, a game, a search portal, or music). The grouped applications may be applications used for an identical purpose and thus, may execute an identical function. Accordingly, the processor 210 may map an identical function to an identical touch input. For example, the processor 210 may group the browsing application 1 722 and the browsing application 2 724, as a single group. The grouped two applications may execute an identical function. Also, the processor 210 may map an identical function to an identical touch input on a virtual button. For example, when a user uses a virtual button based on grouped applications, the user may execute an identical function with an identical touch input. That is, the user may execute an identical function with an identical motion even when different applications are grouped. Therefore, the user may conveniently use an application through grouping applications. Grouping may be determined by a producer when an application is installed, or may be arbitrarily determined based on the settings by the user.

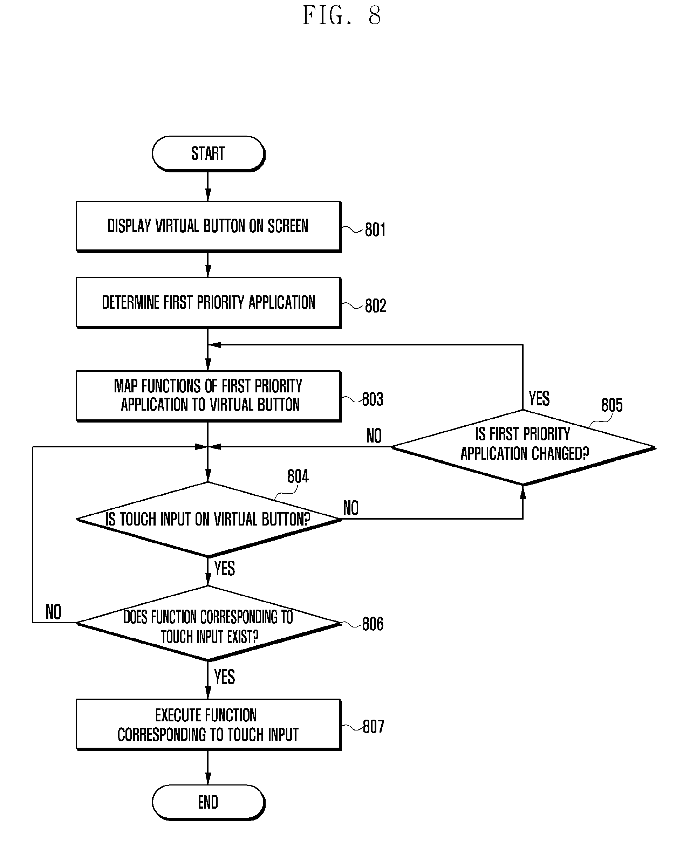

FIG. 8 is a flowchart illustrating an operation of mapping a function of a first priority application to each touch input, and executing a mapped function in response to a touch input according to an embodiment of the present disclosure.

Referring to FIG. 8, the processor 210 displays a virtual button on a screen of the electronic device 200 in operation 801. In operation 802, the processor 210 determines a first priority application. For example, the processor 210 may determine a process having the first priority in a multi-programming system. Here, the electronic device 200 may be in a state of executing at least one application. The first priority application may be a foreground application that is displayed on an uppermost layer of the display module 260. Also, when media (for example, audio, video, or the like) is played back, the first priority application may be an application that plays back the media. In operation 803, the processor 210 may map functions corresponding to the determined first priority application to virtual button-based touch inputs, respectively. Here, the touch input may include "sliding to the left side" from the center of the virtual button, "sliding to the right side," "sliding in the upper direction," "sliding in the lower direction," or the like. In operation 804, the processor 210 may determine whether a virtual button-based touch input is input. For example, the processor 210 may sense a touch input of the user through the touch panel 252 of the user input module 250. Further, the processor 210 may determine a virtual button-based touch input. When the processor 210 fails to determine the touch input in operation 804, the processor 210 may determine whether the first priority application is changed in operation 805. When it is determined that the first priority application is not changed in operation 805, the processor 210 may maintain existing mapped functions. Further, the processor 210 may recognize a touch input on the virtual button in operation 804. Conversely, when it is determined that the first priority application is changed in operation 805, the processor 210 may map functions of the first priority application, which is changed in operation 803, to touch inputs, respectively. That is, the processor 210 may change the existing mapped functions to the functions corresponding to the changed application, and execute mapping. When the processor 210 recognizes the virtual button-based touch input in operation 804, the processor 210 may determine whether a function corresponding to the touch input exists in operation 806. When it is determined that the function corresponding to the touch input is not mapped in operation 806 (e.g., the function corresponding to the touch input does not exist), the processor 210 may determine whether another touch input exists in operation 804. When the processor 210 determines the function corresponding to the touch input in operation 806 (e.g., the function corresponding to the touch input does exist), the processor 210 may execute the function corresponding to the touch input in operation 807. In this example, the executed function may be one of the functions of the first priority application. Also, the executed function may be a function of popping up a new window to execute another application. That is, the processor 210 may execute, using the virtual button, a function of switching to another application, in addition to a function corresponding to the first priority application. The electronic device 200 may execute another predetermined function which is irrelevant to a current task, through the multi-tasking capability.

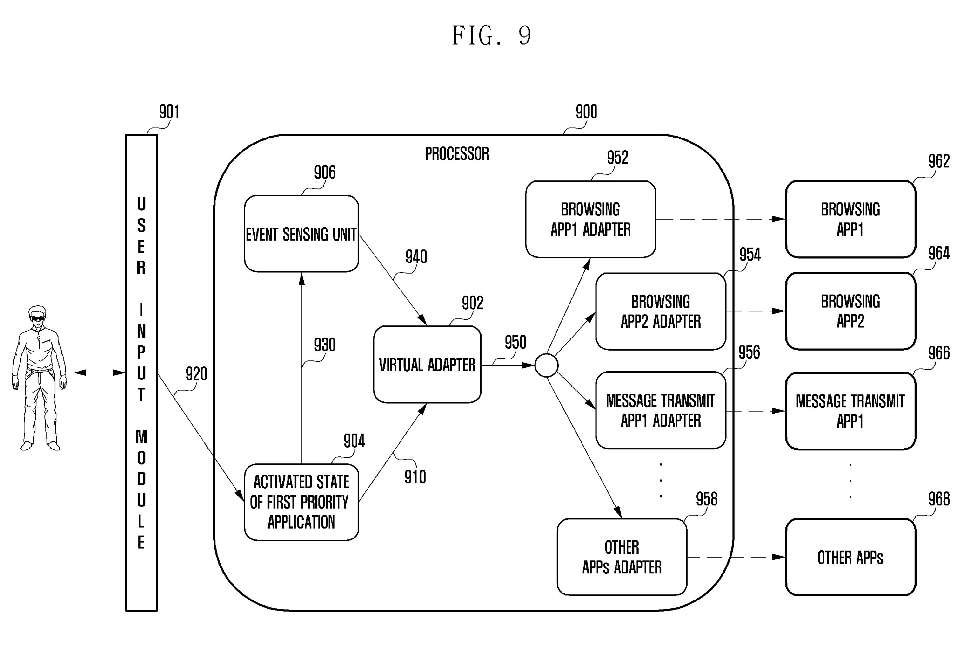

FIG. 9 is a diagram illustrating a method of executing a function of a first priority application that is mapped in advance, in response to a touch input of a user, according to an embodiment of the present disclosure.

Referring to FIG. 9, a processor 900 may include a virtual adapter 902, an event sensing unit 906, and respective application adapters 952 (browsing APP1 adapter), 954 (browsing APP2 adapter), 956 (message transmit APP1 adapter), and 958 (other APPs adapter). The processor 900 may determine an activated state 904 of a first priority application. The processor 900 may determine the activated state 904 of the first priority application, and map functions of the first priority application on virtual button-based touch inputs. The processor 900 may determine the activated state 904 of the first priority application, and generate the virtual adapter 902 to execute a function of the first priority application, in operation 910. The virtual adapter 902 may connect functions mapped to be executed in response to a corresponding user touch input, and an application corresponding to the functions. In operation 910, the processor 900 may map the functions of the first priority application to virtual button-based touch inputs. Further, the processor 900 receives a touch input of the user through a user input module 901 in operation 920, and the processor 900 transmits the received touch input of the user (a touch input signal) to the event sensing unit 906 in operation 930. Here, the event sensing unit 906 may be included in the middleware 132 of the memory 130. The processor 900 may determine whether the touch input of the user corresponds to a virtual button-based touch input, using the event sensing unit 906. When it is determined that the touch input of the user is the virtual button-based touch input in operation 940, the processor 900 may transmit the touch input of the user to the virtual adapter 902. In operation 950, the processor 900 may control each application adapter 952, 954, 956, and 958, so as to execute a function corresponding to the touch input of the user. The processor 900 may execute a function 962 (browsing APP1), 964 (browsing APP2), 966 (message transmit APP1), and 968 (other APPs) associated with each application through corresponding application adapter 952, 954, 958, and 958. The functions 962, 964, 966, and 968 associated with the applications may be the functions corresponding to the applications, and applications used for an identical purpose may execute an identical function. The processor 900 may group the applications used for the identical purpose, and may map an identical user touch input to an identical function. Although not illustrated, the processor 900 may pop up a new window to execute another application, in addition to executing a predetermined function of an application.

Various aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include Read-Only Memory (ROM), Random-Access Memory (RAM), CD-ROMs, magnetic tapes, floppy disks, and optical data storage devices. The non-transitory computer readable recording medium can also be distributed over network coupled computer systems so that the computer readable code is stored and executed in a distributed fashion. Also, functional programs, code, and code segments for accomplishing the present disclosure can be easily construed by programmers skilled in the art to which the present disclosure pertains.

At this point it should be noted that various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include Read-Only Memory (ROM), Random-Access Memory (RAM), CD-ROMs, magnetic tapes, floppy disks, and optical data storage devices. The processor readable mediums can also be distributed over network coupled computer systems so that the instructions are stored and executed in a distributed fashion. Also, functional computer programs, instructions, and instruction segments for accomplishing the present disclosure can be easily construed by programmers skilled in the art to which the present disclosure pertains.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
a display module;
a touch panel configured to recognize a touch input;
a memory configured to have applications installed thereon; and
a processor configured to determine a first priority application among the applications installed in the memory, to map a function of the first priority application to a virtual button based on a predetermined touch input, to recognize the touch input on the virtual button displayed by the display module, and to execute a function corresponding to the recognized touch input.

2. The electronic device of claim 1, wherein, when the first priority application is changed, the processor is further configured to recognize an application that is changed to the first priority application, and to map, to the virtual button, a function of the application which is changed to the first priority application, based on the predetermined touch input.

3. The electronic device of claim 2, wherein the processor is further configured to recognize a foreground application displayed on an uppermost layer as the application that is changed to the first priority application.

4. The electronic device of claim 1, wherein the processor is further configured to:
group identical types of applications; and
execute an identical function of the grouped applications in response to an identical touch input.

5. The electronic device of claim 4, wherein the processor is further configured to execute a function commonly associated with the grouped applications in response to another predetermined touch input.

6. The electronic device of claim 1, wherein the processor is further configured to control the display module to always display the virtual button on an uppermost layer.

7. A method of an electronic device for executing a function in response to a touch input, the method comprising:
determining, by the electronic device, a first priority application among applications installed in the electronic device;
mapping a function of the first priority application to a virtual button based on a predetermined touch input;
recognizing the touch input on the virtual button that is displayed by a display module; and
executing a function corresponding to the recognized touch input.

8. The method of claim 7, further comprising:
recognizing a change of the first priority application,
wherein the mapping of the function of the first priority application to the virtual button based on the predetermined touch input comprises:
mapping, to the virtual button, a function of an application which is changed to the first priority application, based on the predetermined touch input.

9. The method of claim 8, wherein the recognizing of the change of the first priority application comprises:
determining a foreground application displayed on an uppermost layer as the first priority application.

10. The method of claim 7, wherein the mapping of the function of the first priority application to the virtual button based on the predetermined touch input comprises:
determining the first priority application; and
mapping, to the virtual button, a function of the determined first priority application, based on the touch input.

11. The method of claim 10, further comprising:
grouping identical types of applications; and
mapping, to the virtual button, an identical function of the grouped applications, based on an identical touch input.

12. The method of claim 10, wherein the mapping of the function of the determined first priority to the virtual button based on the touch input comprises:
mapping, to the virtual button, a function commonly associated with the grouped applications, based on another predetermined touch input.

13. The method of claim 7, wherein the executing of the function corresponding to the recognized touch input comprises:
executing another application.

14. The method of claim 7, wherein the virtual button is always displayed on an uppermost layer of the display module.

15. The method of claim 7 further comprising:
changing a size of the virtual button based on a size of a user's finger.
